# EUROPÄISCHE PATENTSCHRIFT

(11) **EP 2 956 246 B1**
(45) Veröffentlichungstag und Bekanntmachung des Hinweises auf die Patenterteilung: **14.12.2016**
(21) Anmeldenummer: 14704762.5
(22) Anmeldetag: 03.02.2014
(51) Int. Cl.: B32B 7/02, B32B 27/06, B32B 27/18, B32B 27/40, B32B 1/08, C08J 9/14, C08G 18/22, C08G 18/40, C08G 18/42, C08G 18/18, C08G 101/00, B29C 44/46, C08J 9/02

(54) **VERFAHREN ZUR HERSTELLUNG VON VERBUNDELEMENTEN**
METHOD FOR PRODUCING COMPOUND ELEMENTS
PROCÉDÉ DESTINÉ À LA FABRICATION D'ÉLÉMENTS COMPOSITES

(30) Priorität: 13.02.2013 EP 13155029
(43) Veröffentlichungstag der Anmeldung: 23.12.2015
(73) Patentinhaber: BASF SE, 67056 Ludwigshafen am Rhein (DE)
(72) Erfinder: JACOBMEIER, Olaf, 32312 Lübbecke (DE); KAMPF, Gunnar, 32351 Stemwede-Haldem (DE)
(74) Vertreter: BASF IP Association
(86) Internationale Anmeldenummer: PCT/EP2014/051980
(87) Internationale Veröffentlichungsnummer: WO 2014/124824

(56) Entgegenhaltungen:
- EP-A1- 2 465 891
- WO-A2-2009/077490
- DE-A1-102005 041 763
- DE-A1-102011 079 651
- DE-U1-202011 001 109

## Beschreibung

Die Erfindung betrifft ein verbessertes Verfahren zur Herstellung von Verbundelementen umfassend mindestens eine Deckschicht und mindestens eine Schicht aus Hartschaumstoff auf Isocyanatbasis mittels einer feststehenden Auftragsvorrichtung, in welchem das fließfähige Ausgangsmaterial folgende Komponenten umfasst: A) mindestens ein Polyisocyanat, B) mindestens eine Verbindung, die mit Isocycanatgruppen unter Bildung von Urethan reagiert, C) mindestens ein Treibmittel, D) Katalysatoren umfassend mindestens eine die Isocyanuratbildung katalysierende Verbindung D1) und mindestens eine die Polyurethanbildung katalysierende Verbindung D2) enthaltend mindestens eine Aminogruppe, und E) gegebenenfalls Hilfsmittel und Zusatzstoffe, wobei die Komponente A) und die Komponente B) so eingesetzt werden, dass die Isocyanatkennzahl mindestens 180 beträgt, und wobei das Gewichtsverhältnis der Verbindung D2) zur Verbindung D1) von 0,75 bis 8 beträgt.

Die Herstellung von Verbundelementen aus insbesondere metallischen Deckschichten und einem Kern aus Schaumstoffen auf Isocyanatbasis, zumeist Polyurethan-(PUR) oder Polyisocyanurat-(PIR) Schaumstoffen, häufig auch als Sandwichelemente bezeichnet, auf kontinuierlich arbeitenden Doppelbandanlagen wird gegenwärtig in großem Umfang praktiziert.

Neben Sandwichelementen zur Kühlhausisolierung gewinnen Elemente zur Gestaltung von Fassaden verschiedenster Gebäude immer mehr an Bedeutung. Als Deckschichten werden dabei neben beschichteten Stahlblechen auch Edelstahl-, Kupfer- oder Aluminiumbleche eingesetzt. Aus verschiedensten Gründen kommt es bei der Herstellung der Sandwichelemente oftmals zu unerwünschten Lufteinschlüssen zwischen den beiden Deckschichten und dem Schaumstoff auf Isocyanatbasis, sogenannten Lunkern. Diese Lufteinschlüsse zwischen Blech und Schaumstoff können besonders bei starken Temperaturwechseln und dunklen Farbtönen der Deckschicht in der Anwendung als Konstruktionselement zu Ausbeulungen des Bleches führen und die Wand unansehnlich machen.

Weiterhin wird die Haftung zwischen dem Isolierschaum und den Deckschichten vermindert.

WO 2009/077490 beschreibt ein Verfahren zur Herstellung von Verbundelementen umfassend mindestens eine Deckschicht b) und mindestens eine Schicht aus Hartschaumstoff auf Isocyanatbasis. Zwar liefert dieses Verfahren bereits Hartschaumschichten mit geringen Oberflächendefekten (Lunkern) und einer gute Oberflächenstruktur der Schaumgrenze zur angrenzenden Deckschicht. Die Oberflächenstruktur des Schaums ist jedoch verbesserungswürdig.

DE102005041763 offenbart den Einsatz eines Katalysatorsystems aus einem Polyurethankatalysator auf Basis einer tertiären Aminverbindung und einem Polyisocyanuratkatalysator, ausgewählt aus Amonium-, Alkali- oder Erdalkalimetallsalz einer Carbonsäure zur Herstellung von ameisensäure-getriebenen Polyisocyanurat-Hartschaumstoffen.

Es besteht daher die Aufgabe ein Verfahren zur Herstellung von Polyurethan-Hartschaumstoffen zu entwickeln, welches die Lunkerbildung an der Oberfläche der Hartschaumstoffe auf Isocyanatbasis sowohl zur oberen, als auch zur unteren, Deckschicht nachhaltig minimiert oder ganz vermeidet, und somit zu Schäumen mit guter Haftung und Oberflächenqualität führt.

Die Aufgabe wird gelöst durch ein Verfahren zur Herstellung von Verbundelementen umfassend mindestens eine Deckschicht b) und mindestens eine Schicht aus Hartschaumstoff auf Isocyanatbasis a), die als fließfähiges Ausgangsmaterial a*) auf die Deckschicht b) aufgebracht wird, während die Deckschicht b) kontinuierlich bewegt wird, wobei die Aufbringung mittels einer feststehenden Auftragsvorrichtung c) erfolgt,
dadurch gekennzeichnet dass das Ausgangsmaterial a*) folgende Komponenten umfasst:
A) mindestens ein Polyisocyanat,
B) mindestens eine Verbindung, die mit Isocycanatgruppen unter Bildung von Urethan reagiert,
C) mindestens ein Treibmittel,
D) Katalysatoren umfassend mindestens eine die Isocyanuratbildung katalysierende Verbindung D1) und mindestens eine die Polyurethanbildung katalysierende Verbindung D2), die sich von der Verbindung D1) unterscheidet, und
E) gegebenenfalls Hilfsmittel und Zusatzstoffe,
wobei Verbindung D2) mindestens eine Aminogruppe enthält, die Komponente A) und die Komponente B) bis E) so eingesetzt werden, dass die Isocyanatkennzahl mindestens 180 beträgt, und das Gewichtsverhältnis der Verbindung D2) zur Verbindung D1) von 0,75 bis 8 beträgt.

Die Erfindung wird nachfolgend näher erläutert. Kombinationen von bevorzugten Ausführungsformen verlassen den Rahmen der vorliegenden Erfindung nicht. Dies gilt insbesondere in Bezug auf die als bevorzugt gekennzeichneten Ausführungsformen der einzelnen Komponenten A) bis E) der vorliegenden Erfindung und in Bezug auf die Kombination bevorzugter Komponenten A) bis E) mit bevorzugten Ausführungsformen des Auftragsverfahrens.

### Komponente A

Unter Polyisocyanat wird im Rahmen der vorliegenden Erfindung eine organische Verbindung verstanden, welche mindestens zwei reaktive Isocyanatgruppen pro Molekül enthält, d. h. die Funktionalität beträgt mindestens 2. Sofern die eingesetzten Polyisocyanate oder ein Gemisch mehrerer Polyisocyanate keine einheitliche Funktionalität aufweisen, so beträgt der zahlengewichtete Mittelwert der Funktionalität der eingesetzten Komponente A) mindestens 2.

Als Polyisocyanate A) kommen die an sich bekannten aliphatischen, cycloaliphatischen, araliphatischen und vorzugsweise die aromatischen mehrwertigen Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente A) in diesem Fall verschiedene mehrfunktionelle Isocyanate enthält. Als Polyisocyanat in Betracht kommende mehrfunktionelle Isocyanate weisen zwei (im folgenden Diisocyanate genannt) oder mehr als zwei Isocyanatgruppen pro Molekül auf.

Im Einzelnen seien insbesondere genannt: Alkylendiisocyanate mit 4 bis 12 Kohlenstoffatomen im Alkylenrest, wie 1,12-Dodecandiioscyanat, 2-Ethyltetramethylendiisocyanat-1,4, 2-Methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-lsocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Polyisocyanate, wie 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-diphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophoron-düsocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat und 4,4'-, 2,4'- und/oder 2,2'-Dicyclohexylmethandiisocyanat.

Besonders bevorzugt sind als Polyisocyanate der Komponente A) folgende Aus-führungsformen:
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Als Polyisocyanat ganz besonders bevorzugt ist polymeres Diphenylmethandiisocyanat. Bei polymerem Diphenylmethandiisocyanat (im Folgenden polymeres MDI genannt) handelt es sich um ein Gemisch aus zweikernigem MDI und oligomeren Kondensationsprodukten und somit Derivaten von Diphenylmethandiisocyanat (MDI). Die Polyisocyanate können bevorzugt auch aus Mischungen von monomeren aromatischen Diisocyanaten und polymerem MDI aufgebaut sein.

Polymeres MDI enthält neben zweikernigem MDI ein oder mehrere mehrkernige Kondensationsprodukte des MDI mit einer Funktionalität von mehr als 2, insbesondere 3 oder 4 oder 5. Polymeres MDI ist bekannt und wird häufig als Polyphenylpolymethylenisocyanat oder auch als oligomeres MDI bezeichnet. Polymeres MDI ist üblicherweise aus einer Mischung aus MDI-basierten Isocyanaten mit unterschiedlicher Funktionalität aufgebaut. Üblicherweise wird polymeres MDI im Gemisch mit monomerem MDI eingesetzt.

Die (mittlere) Funktionalität eines Polyisocyanates, welches polymeres MDI enthält, kann im Bereich von ungefähr 2,2 bis ungefähr 5 variieren, insbesondere von 2,3 bis 4, insbesondere von 2,4 bis 3,5. Eine solche Mischung von MDI-basierten mehrfunktionellen Isocyanaten mit unterschiedlichen Funktionalitäten ist insbesondere das Roh-MDI, das bei der Herstellung von MDI als Zwischenprodukt erhalten wird.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® vertrieben.

Vorzugsweise beträgt die Funktionalität der Komponente A) mindestens zwei, insbesondere mindestens 2,2 und besonders bevorzugt mindestens 2,4. Die Funktionalität der Komponente A) beträgt bevorzugt von 2,2 bis 4 und besonders bevorzugt von 2,4 bis 3.

Vorzugsweise beträgt der Gehalt an Isocyanatgruppen der Komponente A) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer besonders bevorzugten Ausführungsform besteht die Komponente A) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat. Im Rahmen dieser bevorzugten Ausführungsform enthält die Komponente (a1) besonders bevorzugt oligomeres Diphenylmethandiisocyanat und weist eine Funktionalität von mindestens 2,4 auf.

Die Viskosität der eingesetzten Komponente A) kann in einem weiten Bereich variieren. Vorzugsweise weist die Komponente A) eine Viskosität von 100 bis 3000 mPa*s, besonders bevorzugt von 200 bis 2500 mPa*s, auf.

Häufig werden auch modifizierte Polyisocyanate, d.h. Produkte, die durch chemische Umsetzung organischer Polyisocyanate erhalten werden und die mindestens zwei reaktive Isocyanatgruppen pro Molekül aufweisen, verwendet. Insbesondere genannt seien Ester-, Harnstoff-, Biuret-, Allophanat-, Carbodiimid-, Isocyanurat-, Uretdion-, Carbamat- und/oder Urethangruppen enthaltende Polyisocyanate.

Im Einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethan-diisocyanat, modifizierte 4,4'- und 2,4'-Diphenylmethandiisocyanat-Mischungen, oder modifiziertes Roh-MDI oder 2,4- bzw. 2,6-Toluylendiisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylenpolyoxyethylenglykole, -triole und/oder -tetrole.

Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyester- und/oder vorzugsweise Polyetherpolyolen und 4,4'-Diphenylmethan-diisocyanat, Mischungen aus 2,4'- und 4,4'-Diphenylmethan-diisocyanat, 2,4-und/oder 2,6-Toluylen-diisocyanaten oder Roh-MDI.

Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.

Die modifizierten Polyisocyanate können miteinander oder mit unmodifizierten organischen Polyisocyanaten wie z.B. 2,4'-, 4,4'-Diphenyl-methan-diisocyanat, Roh-MDI, 2,4- und/oder 2,6-Toluylen-diisocyanat gegebenenfalls gemischt werden. Besonders bewährt und vorzugsweise zur Anwendung kommen die folgenden Polyisocyanate: Mischungen aus Toluylendiisocyanaten und Roh-MDI oder Mischungen aus modifizierten Urethangruppen enthaltenden organischen Polyisocyanaten mit einem NCO-Gehalt von 33,6 bis 15 Gew.-%, insbesondere solche auf Basis von Toluylendiisocyanaten, 4,4'-Diphenylmethan-diisocyanat, DiphenylmethandiisocyanatIsomerengemischen oder Roh-MDI und insbesondere Roh-MDI mit einem Diphenylmethandüsocyanat-Isomerengehalt von 25 bis 80 Gew.-%, vorzugsweise von 30 bis 55 Gew.-%.

### Komponente B

Erfindungsgemäß umfasst Komponente B) mindestens eine Verbindung, die mit Isocycanatgruppen unter Bildung von Urethan reagiert. Derartige Verbindungen sind dem Fachmann an sich bekannt. Komponente B) umfasst insbesondere mindestens ein Polyol, d.h. eine Verbindung mit mindestens zwei gegenüber Isocyanaten reaktiven Hydroxygruppen.

Als Verbindungen der Komponente B) werden vorzugsweise Polyesterpolyole B1) oder eine Mischung aus Polyesterpolyolen B1) und Polyetherpolyolen B2) eingesetzt, besonders bevorzugt sind Mischungen aus einem oder mehreren Polyesterpolyolen B1) und einem oder mehreren Polyetherpolyolen B2).

Geeignete Polyesterpolyole B1) können beispielsweise aus organischen Dicarbonsäuren mit 2 bis 12 Kohlenstoffatomen, vorzugsweise aromatischen, oder Gemischen aus aromatischen und aliphatischen Dicarbonsäuren, besonders bevorzugt ausschließlich aromatischen Dicarbonsäuren und mehrwertigen Alkoholen hergestellt werden.

Als Dicarbonsäuren kommen insbesondere in Betracht: Bernsteinsäure, Glutarsäure, Adipinsäure, Korksäure, Azelainsäure, Sebazinsäure, Decandicarbonsäure, Maleinsäure, Fumarsäure, Phthalsäure, Isophthalsäure und Terephthalsäure. Verwendet werden können ebenso Derivate dieser Dicarbonsäuren, wie beispielsweise Dimethylterephthalat. Die Dicarbonsäuren können dabei sowohl einzeln als auch im Gemisch verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Als aromatische Dicarbonsäuren bzw. als aromatische Dicarbonsäurederivate werden vorzugsweise Phthalsäure, Phthalsäureanhydrid, Terephthalsäure und/oder Isophthalsäure im Gemisch oder alleine verwendet, bevorzugt Verwendung finden Phthalsäure, Phthalsäureanhydrid, Terephthalsäure. Besonders bevorzugt ist die Verwendung von Terephthalsäure oder Dimethylterephthalat, im Speziellen Terephthalsäure. Als aliphatische Dicarbonsäuren werden vorzugsweise Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure verwendet. Beispiele für zwei- und mehrwertige Alkohole sind: Ethandiol, Diethylenglykol, 1,2-bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythritol, bzw. deren Alkoxylate. Vorzugsweise verwendet werden Ethandiol, Diethylenglykol, Glycerin, Trimethylolpropan und Pentaerythritol, bzw. deren Alkoxylate oder Mischungen aus mindestens zwei der genannten Polyole. Eingesetzt werden können ferner Polyesterpolyole aus Lactonen, z.B. ε-Caprolacton oder Hydroxycarbonsäuren, z.B. ω-Hydroxycapronsäure.

Zur Herstellung der weiteren Polyesterpolyole B1) kommen auch biobasierte Ausgangsstoffe und/oder deren Derivate in Frage, wie z. B. Rizinusöl, Polyhydroxyfettsäuren, Ricinolsäure, Hydroxyl-modifizierten Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, Hydroxyl-modifizierten Fettsäuren und Fettsäureester basierend auf Myristoleinsäure, Palmitoleinsäure, ÖIsäure, Vaccensäure, Petroselinsäure, Gadoleinsäure, Erukasäure, Nervonsäure, Linolsäure, α-und γ-Linolensäure, Stearidonsäure, Arachidonsäure, Timnodonsäure, Clupanodonsäure und Cervonsäure.

Die Polyetherpolyole B2) können nach bekannten Verfahren, beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält, oder durch kationische Polymerisation mit Lewis-Säuren, wie Antimonpentachlorid, Borfluorid-Etherat oder Bleicherde, hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan. Besonders bevorzugt sind die genannten diprimären Amine, beispielsweise Ethylendiamin.

Als Startermoleküle kommen ferner in Betracht: Alkanolamine, wie z.B. Ethanolamin, N-Methylund N-Ethylethanolamin, Dialkanolamine, wie z.B. Diethanolamin, N-Methyl- und N-Ethyldiethanolamin, und Trialkanolamine, wie z.B. Triethanolamin, und Ammoniak.

Vorzugsweise verwendet werden zwei- oder mehrwertige Alkohole, wie Ethandiol, Propandiol-1,2 und -1,3, Diethylenglykol (DEG), Dipropylenglykol, Butandiol-1,4, Hexandiol-1,6, Glycerin, Trimethylolpropan, Pentaerythrit, Sorbit und Saccharose.

Die Polyetherpolyole B2), vorzugsweise Polyoxypropylenpolyole und Polyoxyethylenpolyole, besonders bevorzugt Polyoxyethylenpolyole, besitzen eine Funktionalität von vorzugsweise 2 bis 6, besonders bevorzugt 2 bis 4, insbesondere 2 bis 3 und im Speziellen 2 und zahlenmittlere Molekulargewichte von 150 bis 3000 g/mol, vorzugsweise 200 bis 2000 g/mol und insbesondere 250 bis 1000 g/mol.

In einer bevorzugten Ausführungsform der Erfindung wird ein alkoxyliertes Diol, bevorzugt ein ethoxyliertes Diol, beispielsweise ethoxylierter Ethylenglykol, als Polyetherpolyol B2) verwendet, vorzugsweise handelt es sich dabei um Polyethylenglykol.

In einer speziellen Ausführungsform der Erfindung besteht die Polyetherol-Komponente B2) ausschließlich aus Polyethylenglykol, vorzugsweise mit einem zahlenmittleren Molekulargewicht von 250 bis 1000 g/mol.

In einer besonders bevorzugten Ausführungsform umfasst Komponente B) sowohl mindestens ein Polyesterol B1) als auch mindestens ein Polyetherol B2). Das Gewichtsverhältnis Polyesterpolyol B1) zu Polyetherpolyol B2) ist dabei vorzugsweise größer 1, bevorzugt größer 2, besonders bevorzugt größer 4 und insbesondere größer 5,5. Gleichzeitig ist Gewichtsverhältnis Polyesterpolyol B1) zu Polyetherpolyol B2) vorzugsweise kleiner 20, insbesondere kleiner 15.

### Komponente C

Zu Treibmitteln C), welche zur Herstellung der Polyurethan-Hartschaumstoffe verwendet werden, gehören vorzugsweise Wasser, Ameisensäure und Gemische daraus. Diese reagieren mit Isocyanatgruppen unter Bildung von Kohlendioxid und im Falle von Ameisensäure zu Kohlendioxid und Kohlenstoffmonoxid. Da diese Treibmittel das Gas durch eine chemische Reaktion mit den Isocyanatgruppen freisetzen, werden sie als chemische Treibmittel bezeichnet. Daneben können physikalische Treibmittel wie niedrig siedende Kohlenwasserstoffe eingesetzt werden. Geeignet sind insbesondere Flüssigkeiten, welche gegenüber den Polyisocyanaten A) inert sind und Siedepunkte unter 100 °C, vorzugsweise unter 50 °C bei Atmosphärendruck aufweisen, so dass sie unter dem Einfluss der exothermen Polyadditionsreaktion verdampfen. Beispiele derartiger, vorzugsweise verwendeter Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Vorzugsweise werden keine halogenierten Kohlenwasserstoffe als Treibmittel verwendet. Vorzugsweise werden als chemische Treibmittel Wasser, Ameisensäure-Wasser-Mischungen oder Ameisensäure verwendet, besonders bevorzugte chemische Treibmittel sind Ameisensäure-Wasser-Mischungen oder Ameisensäure. Vorzugsweise werden als physikalische Treibmittel Pentanisomere, bzw. Mischungen von Pentanisomeren verwendet.

Die chemischen Treibmittel können dabei alleine, d.h. ohne Zusatz von physikalischen Treibmitteln, oder zusammen mit physikalischen Treibmitteln verwendet werden. Vorzugsweise werden die chemischen Treibmittel zusammen mit physikalischen Treibmitteln verwendet, wobei die Verwendung von Ameisensäure-Wasser-Mischungen oder reiner Ameisensäure zusammen mit Pentanisomeren oder Gemischen aus Pentanisomeren bevorzugt sind.

Die Treibmittel sind entweder ganz oder teilweise in der Polyolkomponente (d.h. B+C+D+E) gelöst oder werden direkt vor dem Verschäumen der Polyolkomponente über einen Statikmischer zudosiert. Für gewöhnlich liegen Wasser, Ameisensäure-Wasser-Mischungen oder Ameisensäure ganz oder teilweise in der Polyolkomponente gelöst vor und wird das physikalische Treibmittel (beispielsweise Pentan) und gegebenenfalls der Rest des chemischen Treibmittels "online" dosiert.

Zu der Polyolkomponente wird in situ Pentan, eventuell ein Teil des chemischen Treibmittels, sowie teilweise oder vollständig der Katalysator zugegeben. Die Hilfs- und Zusatzstoffe, wie auch die Flammschutzmittel sind bereits im Polyolblend enthalten.

Die eingesetzte Menge des Treibmittels bzw. der Treibmittelmischung liegt bei 1 bis 45 Gew.-%, vorzugsweise 1 bis 30 Gew.-%, besonders bevorzugt 1,5 bis 20 Gew.-%, jeweils bezogen auf die Summe der Komponenten B bis E.

Dient Wasser, Ameisensäure oder eine Ameisensäure-Wasser-Mischung als Treibmittel, so wird das Wasser, die Ameisensäure oder die Ameisensäure-Wasser-Mischung vorzugsweise der Polyolkomponente (d. h. der Mischung der Komponenten B bis E) in einer Menge von 0,2 bis 10 Gew.-%, bezogen auf das Gesamtgewicht der Komponenten B bis E, zugesetzt. Der Zusatz des Wassers, der Ameisensäure oder der Ameisensäure-Wasser-Mischung kann in Kombination mit dem Einsatz der anderen beschriebenen Treibmittel erfolgen. Bevorzugt wird Wasser in Kombination mit Pentan eingesetzt.

### Komponente D

Erfindungsgemäß umfasst das Ausgangsmaterial a*) als Komponente D) mindestens eine Verbindung D1), welche die Isocyanuratbildung katalysiert und mindestens eine Verbindung D2), die sich von der Verbindung D1) unterscheidet und die die Polyurethanbildung katalysiert, wobei das Gewichtsverhältnis der Verbindung D2) zur Verbindung D1) von 0,75 bis 8 beträgt.

Verbindung D1 ist erfindungsgemäß ein Katalysator, der die Trimerisierung von Isocyanaten katalysiert (ein sogenannter Trimerisierungskatalysator). Bevorzugte Verbindungen D1) sind Carboxylate von Alkali- oder Erdalkalimetallen sowie Ammoniumcarboxylate, insbesondere Natrium-, Kalium- und Ammoniumcarboxylate. Bevorzugte Carboxylate sind Formiate, Ethylhexanoate und Acetate, insbesondere Formiat und Acetat, speziell Acetat.

Verbindung D2) ist erfindungsgemäß ein aminischer Katalysator. Als Verbindung D2) sind beispielsweise folgende Verbindungen geeignet: Amidine, wie 2,3-Dimethyl-3,4,5,6-tetrahydropyrimidin, tertiäre Amine, wie Triethylamin, Tributylamin, Dimethylcyclohexylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Bis(2-dimethylaminoethyl)ether, Bis-(dimethylaminopropyl)-harnstoff, Dimethylpiperazin, 1,2-Dimethyl-imidazol, 1-Aza-bicyclo-(3,3,0)-octan und 1,4-Diaza-bi-cyclo-(2,2,2)-octan, und Alkanolaminverbindungen, wie Triethanolamin, Triisopropanolamin, N-Methyl- und N-Ethyl-diethanolamin, N,N-Dimethylaminoethoxyethanol, N,N,N'-Trimethylaminoethyl-ethanolamin und Dimethylethanolamin.

Besonders geeignete Verbindungen D2) sind ausgewählt aus der Gruppe umfassend tertiäre Amine, wie Triethylamin, Tributylamin, Dimethylcyclohexylamin, Dimethylbenzylamin, N,N,N',N'-Tetramethylethylendiamin, Pentamethyldiethylentriamin, Bis(2-dimethylaminoethyl)ether, Dimethylpiperazin, 1,2-Dimethyl-imidazol und Alkanolaminverbindungen, wie Triethanolamin, Triisopropanolamin, N-Methyl- und N-Ethyl-diethanolamin, N,N-Dimethylaminoethoxyethanol, N,N,N'-Trimethylaminoethyl-ethanolamin und Dimethylethanolamin.

In einer besonders bevorzugten Ausführungsform werden in der Katalysatorkomponente D2) ein oder mehrere Verbindungen D2-T) gemäß folgender Struktur eingesetzt:

(CH₃)₂N-CH₂-CH₂-X-CH₂-CH₂-Y,

wobei Y = NR₂ oder OH, vorzugsweise Y = N(CH₃)₂ oder OH, besonders bevorzugt Y = N(CH₃)₂ und wobei X = NR oder O, vorzugsweise X = N-CH₃ oder O, besonders bevorzugt X = N-CH₃. Dabei ist jedes R unabhängig von jedem anderen R wählbar und stellt einen beliebig aufgebauten organischen Rest mit mindestens einem C-Atom dar. Vorzugsweise ist R eine Alkylgruppe mit 1 bis 12 C-Atomen, insbesondere C1- bis C6-Alkyl, besonders bevorzugt Methyl und Ethyl, insbesondere Methyl.

Vorzugsweise beträgt der Gewichtsanteil der Verbindungen D2-T) an der Katalysatorkomponente D2) mindestens 25 Gew.-%, bevorzugt mindestens 50 Gew.-%, besonders bevorzugt mindestens 75 Gew.-% und insbesondere gleich 100 Gew.-%.

Vorzugsweise beträgt das Gewichtsverhältnis der Verbindung D2) zur Verbindung D1) mindestens 0,8; insbesondere mindestens 0,9; bevorzugt mindestens 1, insbesondere mindestens 1,1; besonders bevorzugt mindestens 1,2; insbesondere mindestens 1,3; ganz besonders bevorzugt mindestens 1,4; insbesondere mindestens 1,5.

Erfindungsgemäß beträgt das Verhältnis der Katalysatorkomponente D2) zur Katalysatorkomponente D1) höchstens 8. Bei einem höheren Verhältnis liegt keine zufriedenstellende Härtung vor, so dass sich der Schaum nicht ausreichend schnell bearbeiten lässt. Vorzugsweise beträgt das Verhältnis der Katalysatorkomponente D2) zur Katalysatorkomponente D1) höchstens 7, insbesondere höchstens 6, besonders bevorzugt höchstens 5, insbesondere höchstens 4, ganz besonders bevorzugt höchstens 3.

### Komponente E

Der Reaktionsmischung zur Herstellung der Polyurethan-Hartschaumstoffe können gegebenenfalls auch noch Hilfsmittel und/oder Zusatzstoffe E) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-%, bezogen auf 100 Gew.-% bezogen auf das Gesamtgewicht der Komponenten B bis E, angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrysotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten A bis E, zugegeben, wobei jedoch der Gehalt an Matten, Vliesen und Geweben aus natürlichen und synthetischen Fasern Werte bis 80 Gew.-% erreichen kann.

Als Flammschutzmittel können organische Phosphorsäure- und oder Phosphonsäureester zur Anwendung kommen. Vorzugsweise werden gegenüber Isocyanatgruppen nicht reaktive Verbindungen eingesetzt. Auch Chlor enthaltende Phosphorsäureester gehören zu den bevorzugten Verbindungen. Geeignete Flammschutzmittel sind beispielsweise Tris-(2-Chlorpropyl)phosphat, Triethylphosphat, Diphenylkresylphosphat, Diethyl(ethan)phosphinat, Trikresylphosphat, Tris-(2-chlorethyl)phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole.

Daneben können auch Brom enthaltende Flammschutzmittel zum Einsatz kommen. Als Brom enthaltende Flammschutzmittel werden vorzugsweise Verbindungen eingesetzt, die gegenüber der Isocyanatgruppe reaktiv sind. Derartige Verbindungen sind beispielsweise Ester der Tetrabromphthalsäure mit aliphatischen Diolen und Alkoxylierungsprodukte des Dibrombutendiols. Auch Verbindungen, die sich aus der Reihe der bromierten, OH-Gruppenenthaltenden Neopentylverbindungen ableiten, können zur Anwendung kommen.

Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-Polyadditionsprodukte verwendet werden. Im Allgemeinen hat es sich als zweckmäßig erwiesen, 5 bis 50 Gew.-%, vorzugsweise 5 bis 25 Gew.-%, der genannten Flammschutzmittel bezogen auf 100 Gew.-% der Komponenten B bis E zu verwenden.

Nähere Angaben zu den oben genannten anderen üblichen Hilfs- und Zusatzstoffen sind der Fachliteratur, beispielsweise dem Kunststoff-Handbuch, Polyurethane, Band VII, Hanser-Verlag, München, Wien, 3. Auflage, 1993 zu entnehmen.

Unter Isocyanatkennzahl wird das Äquivalentverhältnis aus Isocyanatgruppen und gegenüber Isocyanat reaktiven Gruppen multipliziert mit 100 verstanden. So bedeutet beispielsweise eine Isocyanatkennzahl von 70, dass auf eine reaktive OH-Gruppe in Komponente B) bis E) 0,7 reaktive NCO-Gruppen in Komponente A) oder auf eine reaktive NCO-Gruppe in Komponente A) 1,43 reaktive NCO-Gruppen in den Komponenten B bis E) vorliegen.

Erfindungsgemäß werden die Komponenten A) und B) bis E) so eingesetzt, dass die Isocyanatkennzahl mindestens 180 beträgt. Vorzugsweise beträgt die Isocyanatkennzahl mindestens 200, insbesondere mindestens 250, besonders bevorzugt mindestens 300, insbesondere mindestens 350. Hierdurch lässt sich einerseits die erfindungsgemäß hohe Oberflächenqualität der Schicht aus Hartschaumstoff erzielen, andererseits ermöglicht das erfindungsgemäß verwendete Katalysatorgemisch in Verbindung mit den genannten Kennzahlen eine besonders günstige Reaktivität im Doppelbandverfahren. Aus technischen Gründen ist die Isocyanatkennzahl nach oben begrenzt und beträgt typischerweise höchstens 1000, vorzugsweise höchstens 800, insbesondere höchstens 600, besonders bevorzugt höchstens 500.

### Auftragsvorrichtung

Erfindungsgemäß erfolgt die Aufbringung mittels einer feststehenden Auftragsvorrichtung. Besonders bevorzugt wird diese feststehende Auftragsvorrichtung aus mindestens einem im Wesentlichen parallel zur Deckschicht b) und im Wesentlichen rechtwinklig zur Bewegungsrichtung der Deckschicht b) und feststehend angebrachten, mit Öffnungen f) versehenem Rohr c) gebildet.

Das mindestens eine Rohr ist besonders bevorzugt parallel zur Deckschicht b) und rechtwinklig zur Bewegungsrichtung der Deckschicht b) angebracht. Das mindestens eine Rohr c) ist im Rahmen des erfindungsgemäßen Verfahrens feststehend, d. h. der Winkel zwischen der Längsachse des Rohres oder der Rohre und der Bewegungsrichtung der Deckschicht ist konstant im Wesentlichen rechtwinklig bzw. rechtwinklig. Es können ein Rohr oder bevorzugt mehrere in Längsrichtung nebeneinander angebrachte Rohre als Auftragsvorrichtung verwendet werden.

Die Auftragsvorrichtung ist aus dem Stand der Technik bekannt und wird beispielsweise in der WO 2009/077490 beschrieben, deren Inhalt hiermit vollständig in die vorliegende Erfindung einbezogen wird. Die Auftragsvorrichtung wird im Folgenden auch als Gießharke bezeichnet.

In einer bevorzugten Ausführungsform werden mindestens zwei mit Öffnungen f) versehene Rohre c) insbesondere so angeordnet, dass sie eine gerade Linie bilden. Vorzugsweise werden 2 bis 4, besonders bevorzugt 2 bis 3 und insbesondere 2 Rohre c) als Auftragsvorrichtung (Gießharke) verwendet.

Die erfindungsgemäße Gießharke besitzt, wie beschrieben, eine rohrähnliche Form, mit Löchern an der Unterseite, verteilt über die gesamte Länge, und der Zufuhr des Reaktionsgemisches entweder an einem Ende der Rohre c) oder vorzugsweise in deren Mitte sitzend. Bei Verwendung mehrerer Rohre c) wird die Zuführung vorzugsweise bei allen Rohren c) in der gleichen Weise vorgenommen.

Die Rohre c) beziehungsweise die in Längsrichtung nebeneinander angeordneten Rohre c) zusammen können eine Länge haben, die gleich der Breite der Deckschicht b) ist. Vorzugsweise ist die Länge des Rohres oder der in Längsrichtung nebeneinander angebrachten Rohre c) geringer als die Breite der Deckschicht b), um sicherzustellen, dass die Reaktionsmischung nicht teilweise neben die Deckschicht b) aufgetragen wird. Dabei ist die Gießharke mittig über der Deckschicht b) angeordnet. Vorzugsweise bedeckt die Gießharke mindestens 70 % der Breite der Deckschicht b). Bei einer Breite der Deckschicht b) von 1,2 m, wie sie bei Sandwich-Elementen üblich ist, wäre in diesem Fall auf jeder Seite eine Breite von 25 cm nicht von der Gießharke bedeckt.

Vorzugsweise bedeckt die Gießharke mindestens 70 %, besonders bevorzugt mindestens 80 %, und insbesondere mindestens 95 % der Breite der Deckschicht b).

Die Gießharke ist vorzugsweise in einer Höhe zur Deckschicht b) von 5 bis 30 cm, bevorzugt 10 bis 30 cm, und insbesondere 15 bis 25 cm, angebracht.

Die Anzahl der Öffnungen f) entlang des Rohres c) beziehungsweise entlang jeden Rohres c) beträgt je nach Länge des Rohres c) mindestens 2, bevorzugt mindestens 6, besonders bevorzugt 10 bis 50, und insbesondere 20 bis 40. Vorzugsweise ist die Anzahl der Löcher eine gerade Zahl.

Die Durchmesser der Öffnungen f) liegen im Bereich von 0,5 bis 10 mm, bevorzugt 1,0 mm bis 4 mm. Die Abstände der Öffnungen f) voneinander betragen vorzugsweise von 5 bis 200 mm, besonders bevorzugt 5 bis 60 mm, und insbesondere 10 bis 30 mm.

Vorzugsweise ist der Abstand und der Durchmesser über die gesamte Länge des Rohres c) gleich.

Das Rohr c) beziehungsweise jedes Rohr hat einen Innendurchmesser von 0,2 bis 5 cm, bevorzugt von 0,3 bis 2,5 cm und insbesondere von 0,2 bis 2 cm.

In einer besonders bevorzugten Ausführungsform ist die Länge der Öffnungen f) über die Länge des Rohres c) beziehungsweise, sofern mehrere Rohre verwendet werden, der Rohre c) unterschiedlich. Unter der Länge der Öffnungen f) ist die Entfernung zu verstehen, die das Gemisch a*) vom Inneren des Rohres c) bis zum Austritt aus dem Rohr c) zurücklegen muss. Dies kann auf unterschiedliche Weise geschehen. Zum einen kann der Innendurchmesser des Rohres c) verändert werden. Dies ist nicht bevorzugt, da derartige Bauteile schwierig herzustellen und zu säubern sind.

Vorzugsweise wird die Länge der Öffnungen f) verändert, indem an der Unterseite des Rohres c) ein oder mehrere Bauteile so angebracht sind, dass die Länge der Bohrungen in der gewünschten Weise variiert. Durch diese Maßnahme wird faktisch die Wandstärke des Rohres c) geändert. Die Lochlängen, betrachtet von dem Ort der Zuführung des Ausgangsmaterials für den Hartschaumstoff auf Isocyanatbasis a*) bis zum Ende, verringern sich nicht linear, sondern exponentiell. Üblicherweise erfolgt die Verlängerung der Öffnungen f) dergestalt, dass die Länge von der Zuführung des Gemisches a*) zu den Enden des Rohres c) hin abnimmt. Das heißt, dass bei der Zuführung des Gemisches a*) in der Mitte des Rohres c) die Länge der Öffnungen f) zu den Rändern hin abnimmt. Bei der Zuführung des Gemisches a*) am Rand des Rohres c) nimmt die nimmt die Länge der Öffnungen f) von der Seite, in der die Zuführung erfolgt, zur anderen Seite hin ab.

Insbesondere kann die Gießharke, die vorzugsweise aus Kunststoff besteht, aus einem einzigen Bauteil bestehen, d. h. in einem Stück hergestellt werden. Die Länge der Öffnungen variiert gemäß den vorhergehenden Ausführungen, indem an der Unterseite des Rohres die Öffnungen durch rohrförmige Verlängerungen in ihrer Länge angepasst werden.

Die Länge der Öffnungen f) ist vorzugsweise so zu wählen, dass das Verhältnis der Länge der Öffnungen f) vom Rand zur Mitte für jedes Rohr c) von 1,1 bis 10 beträgt. Besonders bevorzugt liegt das Verhältnis von 2,5 bis 10, insbesondere von 5 bis 10.

Wenn mehrere Rohre c) verwendet werden, wird die Variation der Länge der Öffnungen f) für alle Rohre c) gleich ausgestaltet. Jedes der mit Öffnungen f) versehenen Rohre c) ist mit einer Mischeinrichtung für die Mischung der Komponenten des fließfähigen Ausgangsmaterials für den Hartschaumstoff auf Isocyanatbasis a*) verbunden. Dies erfolgt üblicherweise mittels einer dazwischen liegenden Zuführung d) und e). Dies ist als Rohr ausgestaltet, im Falle der Verwendung von mehreren Rohren c) ist jedes mit der Zuführung verbunden. Dies kann durch ein Rohr geschehen, von dem wiederum Verbindungsrohre zu den Rohren c) ausgehen.

Der Durchmesser der Zuführungen d) ist vorzugsweise konstant. Er beträgt vorzugsweise 4 bis 30 mm, besonders bevorzugt 6 bis 22 mm.

Das erfindungsgemäße Verfahren wird vorzugsweise so ausgestaltet, dass die Menge des auf die Deckschicht b) aufgetragenen fließfähigen Ausgangsmaterials für den Hartschaumstoff auf Isocyanatbasis a*) von 2 kg/min bis 100 kg/min, bevorzugt von 8 kg/min bis 60 kg/min, beträgt.

Die Viskosität des fließfähigen Ausgangsmaterials für den Hartschaumstoff auf Isocyanatbasis a*) liegt vorzugsweise bei 25 °C von 100 mPa*s bis 4000 mPa*s, besonders bevorzugt von 100 mPa*s bis 3500 mPa*s, insbesondere von 200 bis 2000 mPa*s.

Besonders geeignet ist das erfindungsgemäße Verfahren für Schaumstoffe mit einer geringen Startzeit des Systems. Die Startzeit der für das erfindungsgemäße Verfahren eingesetzten Systeme liegt vorzugsweise unter 15 s, bevorzugt unter 12 s, besonders bevorzugt unter 10 s und insbesondere unter 8 s bei einer Abbindezeit des Systems von 20 bis 60 s. Unter Startzeit versteht man die Zeit zwischen dem Mischen der Polyol- und der Isocyanatkomponente und dem Start der Urethanreaktion. Unter der Abbindezeit wird die Zeit vom Vermischen der Ausgangskomponenten der Schaumstoffe bis zu dem Zeitpunkt verstanden, an dem das Reaktionsprodukt nicht mehr fließfähig ist. Die Abbindezeit wird je nach produzierter Elementdicke sowie Doppelbandgeschwindigkeit angepasst.

Bevorzugt werden die erfindungsgemäßen Hartschaumstoffe auf kontinuierlich arbeitenden Doppelbandanlagen hergestellt. Hier werden mit einer Hochdruckmaschine die Polyol- und die Isocyanatkomponente dosiert und in einem Mischkopf vermischt. Dem Polyolgemisch können zuvor mit separaten Pumpen Katalysatoren und/oder Treibmittel zudosiert werden.

Das Reaktionsgemisch wird kontinuierlich auf die untere Deckschicht aufgetragen. Die untere Deckschicht mit dem Reaktionsgemisch und die obere Deckschicht laufen in das Doppelband ein. Hier schäumt das Reaktionsgemisch auf und härtet aus. Nach dem Verlassen des Doppelbandes wird der endlose Strang in den gewünschten Abmessungen zerschnitten. Auf diese Weise können Sandwichelemente mit metallischen Deckschichten oder Dämmelemente mit flexiblen Deckschichten hergestellt werden.

Die Ausgangskomponenten werden bei einer Temperatur von 15 bis 90 °C, vorzugsweise von 20 bis 60 °C, insbesondere von 20 bis 45 °C, gemischt. Das Reaktionsgemisch kann mit Hochoder Niederdruckdosiermaschinen in geschlossene Stützwerkzeuge gegossen werden. Nach dieser Technologie werden z.B. diskontinuierliche Sandwichelemente gefertigt.

Bevorzugte Schichten aus Polyurethan-Hartschaumstoff weisen eine Dichte von 0,02 bis 0,75 g/cm³, vorzugsweise von 0,025 bis 0,24 g/cm³ und insbesondere von 0,03 bis 0,1 g/cm³ auf. Besonders eignen sie sich als Isolationsmaterial im Bau- und Kühlmöbelsektor, z.B. als Zwischenschicht für Sandwichelemente oder zum Ausschäumen von Kühlschrank- und Kühltruhengehäusen.

Die nach dem erfindungsgemäßen Verfahren hergestellten PUR-Hartschaumstoffe weisen gute Oberflächen mit wenigen Fehlstellen, gute Haftung, und eine gute Härtung auf. Die aus den Komponenten B) bis E) gebildete Mischung weist gleichzeitig eine gute Lagerstabilität bei 20°C bzw. 5°C über mehrere Monate auf.

### Beispiele

Die Erfindung soll anhand der nachfolgenden Beispiele näher erläutert werden.

Die Isocyanate sowie die mit Isocyanat reaktiven Komponenten wurden zusammen mit den Treibmitteln, Katalysatoren und allen weiteren Zusatzstoffen bei einer Isocyanatkennzahl von 370 umgesetzt.

Bei allen Versuchen wurde folgende Polyolkomponente verwendet:

| | |
|---|---|
| 58 Gew.-Teile | eines Polyesteralkohols bestehend aus dem Veresterungsprodukt von Terephthalsäure, Glycerin, Diethylenglykol und Ölsäure mit einer Hydroxylfunktionalität von 2,3 und einer Hydroxylzahl von 245 mg KOH/g. |
| 10 Gew.-Teile | eines Polyetheralkohols mit einer Hydroxylfunktionalität von 2 und einer Hydroxylzahl von 190 mgKOH/g hergestellt durch Polyaddition von Propylenoxid an Ethylenglykol. |
| 30 Gew.-Teile | Tris-2-Chlorisopropylphosphat, |
| 2 Gew.-Teile | Tegostab® B8498 der Firma Goldschmidt, ein Copolymer mit Kammstruktur mit einem Rückgrat auf Basis von Polydimethylsiloxan und Polyetherseitenketten. |

### Herstellung von Sandwichelementen:

Es wurden 100 mm dicke Sandwichelemente mit 0,05 mm dicker Aluminiumfolie als Deckschichten nach dem Doppelbandverfahren hergestellt. Als Auftragsvorrichtung wurden zwei nebeneinander angeordnete, feststehende Rohre mit einer Länge von jeweils 560 mm verwendet, welche parallel zur Deckschicht in einem Abstand von 90 mm und rechtwinklig zur Bewegungsrichtung der Deckschicht angebracht und mit jeweils 14 Öffnungen versehenen waren. Die Zuführung des fließfähigen Ausgangsmaterials erfolgte in der Mitte der Rohre c) und die Länge der Öffnungen des Rohres nahm von der Mitte des Rohres zu dessen Enden hin ab. Die Gesamtaustragsmenge des Reaktionsgemisches betrug 21,0 ± 0,5 kg/min.

### Beispiel 1 (Vergleich)

Weitere Bestandteile der Polyolkomponente:

| | |
|---|---|
| 0,6 Gewichtsteile | Wasser |
| 3,5 Gewichtsteile | Dabco TMR-2 (50 Gew.-%-ige Lösung eines tertiären Ammonium-Formiats in Dipropylenglykol; d.h. Anteil des katalytisch aktiven Salzes ist 1,75 Gewichtsteile) |
| 1,2 Gewichtsteile | Dimethylcyclohexylamin |
| ca. 20 Gewichtsteile | c-Pentan70 (Mischung aus 70 % cyclo-Pentan und 30 % Iso-Pentan) |

### Isocyanatkomponente:

Lupranat® M50 (polymeres Methylendiphenyldüsocyanat (PMDI), mit einer Viskosität von ca. 500 mPa*s bei 25 °C von BASF SE)

Der Austrag der fließfähigen Reaktionsmischung a*) wurde derart berechnet, das sich eine theoretische Gesamtrohdichte von 30 ± 1 g/L ergibt. Die Flüssigrohdichte wurde dabei bei konstantem Gehalt an Wasser von 0,6 Gewichtsteilen und durch Variation des c-Pentan von ca. 20 Gewichtsteilen auf 32 +/- 1g/L eingestellt. Die Abbindezeit wurde ferner auf 30 +/- 1 s durch geringfügige Variation der Menge von Dimethylcyclohexylamin eingestellt.

### Beispiel 2 (erfindungsgemäß)

Die Isocyanate sowie die mit Isocyanat reaktiven Komponenten wurden zusammen mit den Treibmitteln, Katalysatoren und allen weiteren Zusatzstoffen bei einer Isocyanatkennzahl von 370 umgesetzt.

Weitere Bestandteile der Polyolkomponente:

| | |
|---|---|
| 0,6 Gewichtsteile | Wasser |
| 1,6 Gewichtsteile | Kaliumacetat-Lösung (47 Gew.-% in Ethylenglykol; d.h. Anteil des katalytisch aktiven Salzes ist 0,8 Gewichtsteile) |
| 1,0 Gewichtsteile | Pentamethyldiethylentriamin |
| ca. 20 Gewichtsteile | c-Pentan70 (Mischung aus 70 % cyclo-Pentan und 30 % Iso-Pentan) |

### Isocyanatkomponente:

Lupranat® M50 (polymeres Methylendiphenyldüsocyanat (PMDI), mit einer Viskosität von ca. 500 mPa*s bei 25 °C von BASF SE)

Der Austrag der fließfähigen Reaktionsmischung a*) wurde derart berechnet, das sich eine theoretische Gesamtrohdichte von 30 ± 1 g/L ergibt. Die Flüssigrohdichte wurde dabei bei konstantem Gehalt an Wasser von 0,6 Gewichtsteilen und durch Variation des c-Pentan auf 32 +/- 1 g/L eingestellt. Die Abbindezeit wurde ferner auf 30 +/- 1 s durch geringfügige Variation der Menge an Pentamethyldiethylentriamin eingestellt.

Die erhaltenen Sandwichelemente wurden hinsichtlich der Oberflächenbeschaffenheit der aufgetragenen Schicht aus Hartschaum beurteilt, indem die obere und untere Deckschicht von einer 1m×2m großen Schicht aus Hartschaum entfernt wurde und die Oberfläche visuell begutachtet sowie klassifiziert wurde. Die Ergebnisse sind in untenstehender Tabelle 1 dargestellt.

### Vergleichsbeispiel 3

Mit der Rezeptur wie in Beispiel 2 wurden wie nachfolgend beschrieben 100 mm dicke Sandwichelemente mit 0,05 mm dicker Aluminiumfolie als Deckschichten nach dem Doppelbandverfahren hergestellt.

Als Auftragsvorrichtung wurde ein Rohr (Gießharke) der Länge 25 cm und mit Innendurchmesser 12 mm verwendet, welches parallel zur Deckschicht und in Bandlaufrichtung angebracht und mit 41 Öffnungen mit dem Durchmesser 1,8 mm versehenen war. Länge und Durchmesser der Öffnungen waren über die Rohrlänge konstant. Der Abstand der ersten Öffnung bis zur letzten Öffnung betrug 20 cm. Die Zuführung des flüssigen Reaktionsgemisches erfolgte an einem Ende des Rohres. Die zugeführte Menge betrug 16,5 kg/min +/- 0,5 kg/min. Die Gießharke oszillierte während des Auftragens des flüssigen Reaktionsgemisches über die Elementbreite des herzustellenden Sandwichelements.

Die erhaltenen Sandwichelemente wurden ebenfalls hinsichtlich der Oberflächenbeschaffenheit der aufgetragenen Schichten aus Hartschaum beurteilt, indem die obere und untere Deckschicht von einer 1m×2m großen Schicht aus Hartschaum entfernt wurde und die Oberfläche visuell begutachtet sowie klassifiziert wurde.

Die Ergebnisse sind in folgender Tabelle 1 zusammengefasst:

| | Vergleichsbeispiel 1 | Beispiel 2 | Vergleichsbeispiel 3 |
|---|---|---|---|
| Schaumoberfläche der Produktionsoberseite | - | + | - |
| Schaumoberfläche der Produktionsunterseite | - | + | - |

Dabei bedeuten:
+: keine Lunker oder andere Oberflächendefekte, keine Schiebezonen
○: Lunker und/oder andere Oberflächendefekte sowie Schiebezonen in geringfügigem Ausmaß
-: durch Lunker und/oder andere Oberflächendefekte sowie Schiebezonen stark beeinträchtigte Oberfläche

Die Ergebnisse in der Tabelle 1 zeigen, dass die Häufigkeit der Ausbildung von Oberflächendefekten der Produktionsoberseite an der Grenzfläche zur metallischen Deckschicht im erfindungsgemäßen Beispiel deutlich verringert wurde.

## Patentansprüche

1. Verfahren zur Herstellung von Verbundelementen umfassend
- mindestens eine Deckschicht b) und
- mindestens eine Schicht aus Hartschaumstoff auf Isocyanatbasis a), die als fließfähiges Ausgangsmaterial a*) auf die Deckschicht b) aufgebracht wird, während die Deckschicht b) kontinuierlich bewegt wird, wobei
- die Aufbringung mittels einer feststehenden Auftragsvorrichtung c) erfolgt,
**dadurch gekennzeichnet dass** das Ausgangsmaterial a*) folgende Komponenten umfasst:
A) mindestens ein Polyisocyanat,
B) mindestens eine Verbindung, die mit Isocycanatgruppen unter Bildung von Urethan reagiert,
C) mindestens ein Treibmittel,
D) Katalysatoren umfassend mindestens eine die Isocyanuratbildung katalysierende Verbindung D1) und mindestens eine die Polyurethanbildung katalysierende Verbindung D2), die sich von der Verbindung D1) unterscheidet, und
E) gegebenenfalls Hilfsmittel und Zusatzstoffe,
wobei
- Verbindung D2) mindestens eine Aminogruppe enthält,
- die Komponente A) und die Komponente B) bis E) so eingesetzt werden, dass die Isocyanatkennzahl mindestens 180 beträgt, und
- das Gewichtsverhältnis der Verbindung D2) zur Verbindung D1) von 0,75 bis 8 beträgt.

2. Verfahren nach Anspruch 1, wobei Verbindung D1) ausgewählt wird aus Alkali- Erdalkali- und Ammoniumcarboxylaten.

3. Verfahren nach Anspruch 1 oder 2, wobei Verbindung D1) ein Carboxylat eines Alkalimetalls ist.

4. Verfahren nach Anspruch 3, wobei das Carboxylat ausgewählt wird aus Formiat, Ethylhexanoat und Acetat.

5. Verfahren nach Anspruch 4, wobei Verbindung D1 ein Alkalimetallacetat ist.

6. Verfahren nach einem oder mehreren der Ansprüche 1 bis 5, wobei Verbindung D2) ausgewählt wird aus Amidinen, tertiäre Aminen und Alkanolaminen.

7. Verfahren nach einem oder mehreren der Ansprüche 1 bis 6, wobei Komponente D2) mindestens eine Verbindung D2-T) der folgenden Struktur umfasst: NR₂-CH₂-CH₂-X-CH₂-CH₂-Y mit Y = NR₂ oder OH und X = NR oder O, wobei jedes R unabhängig voneinander einen beliebig aufgebauten organischen Rest mit mindestens einem C-Atom repräsentiert.

8. Verfahren nach dem vorhergehenden Anspruch, wobei, Y = NR₂ und X = NR oder O und R = CH₃.

9. Verfahren nach den Ansprüchen 7 oder 8, wobei der Anteil der Verbindung D2-T) an dem Gesamtgewicht der Komponente D2) mindestens 50 Gew.-% beträgt.

10. Verfahren nach einem oder mehreren der Ansprüche 1 bis 9, wobei das Gewichtsverhältnis der Komponente D2) zur Komponente D1) mindestens 1 beträgt.

11. Verfahren nach einem oder mehreren der Ansprüche 1 bis 10, wobei das Gewichtsverhältnis der Komponente D2) zur Komponente D1) höchstens 5 beträgt.

12. Verfahren nach einem oder mehreren der Ansprüche 1 bis 11, wobei Komponente B) mindestens ein Polyesterpolyol B1) und mindestens ein Polyetherpolyol B2) enthält.

13. Verfahren nach einem oder mehreren der Ansprüche 1 bis 12, **dadurch gekennzeichnet, dass** das mit Öffnungen f) versehene Rohr c) in einer Höhe von 5 bis 30 cm oberhalb der Deckschicht b) angebracht ist.

14. Verfahren nach einem oder mehreren der Ansprüche 1 bis 13, wobei die feststehende Auftragsvorrichtung c) aus mindestens einem parallel zur Deckschicht b) und rechtwinklig zur Bewegungsrichtung der Deckschicht b) angebrachten, mit Öffnungen f) versehenen, feststehenden Rohr c) besteht.

15. Verfahren nach einem oder mehreren der Ansprüche 1 bis 14, **dadurch gekennzeichnet, dass** das Rohr so ausgestaltet ist, dass die Zuführung des fließfähigen Ausgangsmaterials a*) in der Mitte des Rohres c) erfolgt und die Länge der Öffnungen des Rohres c) von der Mitte des Rohres c) zu dessen Enden hin abnimmt.

16. Verfahren nach einem oder mehreren der Ansprüche 1 bis 15, wobei die Viskosität des flüssigen Ausgangsmaterials für den Hartschaumstoff auf Isocyanatbasis a*) bei 25 °C zwischen 100 mPa*s und 3500 mPa*s liegt.

## Claims

1. A process for producing composite elements comprising
- at least one outer layer b) and
- at least one isocyanate-based rigid foam layer a) which is applied in the form of flowable starting material a*) to the outer layer b), while the outer layer b) is moved continuously, where
- the application is achieved by means of a fixed applicator apparatus c),
which comprises using the following components comprised in the starting material a*):
A) at least one polyisocyanate,
B) at least one compound which reacts with isocyanate groups to form urethane,
C) at least one blowing agent,
D) catalysts comprising at least one compound D1) which catalyzes isocyanurate formation and at least one compound D2) which catalyzes polyurethane formation and which differs from the compound D1), and
E) optionally auxiliaries and additives,
where
- compound D2) comprises at least one amino group,
- the manner of use of component A) and of component B) to E) is such that the ioscyanate index is at least 180, and
- the ratio by weight of the compound D2) to the compound D1) is from 0.75 to 8.

2. The process according to claim 1, where compound D1) is selected from alkali metal carboxylates, alkaline earth metal carboxylates, and ammonium carboxylates.

3. The process according to claim 1 or 2, where compound D1) is a carboxylate of an alkali metal.

4. The process according to claim 3, where the carboxylate is selected from formate, ethylhexanoate, and acetate.

5. The process according to claim 4, where compound D1 is an alkali metal acetate.

6. The process according to one or more of claims 1 to 5, where compound D2) is selected from amidines, tertiary amines, and alkanolamines.

7. The process according to one or more of claims 1 to 6, where component D2) comprises at least one compound D2-T) of the following structure: NR₂-CH₂-CH₂-X-CH₂-CH₂-Y, where Y = NR₂ or OH and X = NR or 0, where each R represents mutually independently an organic moiety of any desired structure having at least one carbon atom.

8. The process according to the preceding claim, where Y = NR₂ and X = NR or 0, and R = CH₃.

9. The process according to claim 7 or 8, where the proportion of the compound D2-T), based on the total weight of component D2), is at least 50%.

10. The process according to one or more of claims 1 to 9, where the ratio by weight of component D2) to component D1) is at least 1.

11. The process according to one or more of claims 1 to 10, where the ratio by weight of component D2) to component D1) is at most 5.

12. The process according to one or more of claims 1 to 11, where component B) comprises at least one polyester polyol B1) and at least one polyether polyol B2).

13. The process according to one or more of claims 1 to 12, wherein the height at which the tube c) provided with apertures f) has been attached above the outer layer b) is from 5 to 30 cm.

14. The process according to one or more of claims 1 to 13, where the fixed applicator apparatus c) is composed of at least one fixed tube c) provided with apertures f) and attached parallel to the outer layer b) and at right angles to the direction of movement of the outer layer b).

15. The process according to one or more of claims 1 to 14, wherein the design of the tube is such that the input of the flowable starting material a*) takes place in the middle of the tube c), and the length of the apertures of the tube c) decreases from the middle of the tube c) toward the ends of same.

16. The process according to one or more of claims 1 to 15, where the viscosity at 25°C of the liquid starting material a*) for the isocyanate-based rigid foam is from 100 mPa*s to 3500 mPa*s.

## Revendications

1. Procédé de fabrication d'éléments composites, comprenant :
- au moins une couche supérieure b) et
- au moins une couche en mousse dure à base d'isocyanate a), qui est appliquée en tant que matériau de départ fluide a*) sur la couche supérieure b) tandis que la couche supérieure b) est déplacée en continu,
- l'application ayant lieu au moyen d'un dispositif d'application fixe c),
**caractérisé en ce que** le matériau de départ a*) comprend les composants suivantes :
A) au moins un polyisocyanate,
B) au moins un composé qui réagit avec les groupes isocyanate avec formation d'un uréthane,
C) au moins un agent gonflant,
D) des catalyseurs comprenant au moins un composé D1) catalysant la formation d'isocyanurates et au moins un composé D2) catalysant la formation de polyuréthanes, qui est différent du composé D1), et
E) éventuellement des adjuvants et des additifs,
- le composé D2) contenant au moins un groupe amino,
- le composant A) et les composants B) à E) étant utilisés de sorte que l'indice d'isocyanate soit d'au moins 180, et
- le rapport en poids entre le composé D2) et le composé D1) étant de 0,75 à 8.

2. Procédé selon la revendication 1, dans lequel le composé D1) est choisi parmi les carboxylates alcalins, alcalino-terreux et d'ammonium.

3. Procédé selon la revendication 1 ou 2, dans lequel le composé D1) est un carboxylate d'un métal alcalin.

4. Procédé selon la revendication 3, dans lequel le carboxylate est choisi parmi un formiate, un éthylhexanoate et un acétate.

5. Procédé selon la revendication 4, dans lequel le composé D1 est un acétate de métal alcalin.

6. Procédé selon une ou plusieurs des revendications 1 à 5, dans lequel le composé D2) est choisi parmi les amidines, les amines tertiaires et les alcanolamines.

7. Procédé selon une ou plusieurs des revendications 1 à 6, dans lequel le composant D2) comprend au moins un composé D2-T) de la structure suivante : NR₂-CH₂-CH₂-X-CH₂-CH₂-Y avec Y = NR₂ ou OH et X = NR ou 0, les R représentant chacun indépendamment les uns des autres un radical organique de structure quelconque contenant au moins un atome C.

8. Procédé selon la revendication précédente, dans lequel Y = NR₂ et X = NR ou 0 et R = CH₃.

9. Procédé selon les revendications 7 ou 8, dans lequel la proportion du composé D2-T) par rapport au poids total du composant D2) est d'au moins 50 % en poids.

10. Procédé selon une ou plusieurs des revendications 1 à 9, dans lequel le rapport en poids entre le composant D2) et le composant D1) est d'au moins 1.

11. Procédé selon une ou plusieurs des revendications 1 à 10, dans lequel le rapport en poids entre le composant D2) et le composant D1) est d'au plus 5.

12. Procédé selon une ou plusieurs des revendications 1 à 11, dans lequel le composant B) contient au moins un polyester-polyol B1) et au moins un polyéther-polyol B2).

13. Procédé selon une ou plusieurs des revendications 1 à 12, **caractérisé en ce que** le tube c) muni d'ouvertures f) est disposé à une hauteur de 5 à 30 cm au-dessus de la couche supérieure b).

14. Procédé selon une ou plusieurs des revendications 1 à 13, dans lequel le dispositif d'application fixe c) est constitué d' au moins un tube fixe c) muni d'ouvertures f), disposé parallèlement à la couche supérieure b) et perpendiculairement à la direction de déplacement de la couche supérieure b).

15. Procédé selon une ou plusieurs des revendications 1 à 14, **caractérisé en ce que** le tube est configuré de sorte que l'introduction du matériau de départ fluide a*) ait lieu au milieu du tube c) et la longueur des ouvertures du tube c) diminue depuis le milieu du tube c) vers ses extrémités.

16. Procédé selon une ou plusieurs des revendications 1 à 15, dans lequel la viscosité du matériau de départ fluide pour la mousse dure à base d'isocyanate a*) à 25 °C est comprise entre 100 mPa*s et 3 500 mPa*s.
